# FASCICULE DE BREVET EUROPEEN

(11) **EP 1 141 108 B1**
(45) Date de publication et mention de la délivrance du brevet: **23.10.2002**
(21) Numéro de dépôt: 99961117.1
(22) Date de dépôt: 21.12.1999
(51) Int. Cl.: C08K 3/36, C08K 9/06, C08L 83/04

(54) **PROCEDE DE PREPARATION D'UNE SUSPENSION DE SILICE DANS UNE MATRICE SILICONE RETICULABLE PAR POLYCONDENSATION POUR FORMER DES ELASTOMERES**
VERFAHREN ZUR HERSTELLUNG EINER SILICASUSPENSION IN EINER DURCH POLYKONDENSATION ZU KAUTSCHUK VERNETZBAREN SILICONMATRIX
METHOD FOR PREPARING A SILICA SUSPENSION IN A SILICONE MATRIX CROSSLINKABLE BY POLYCONDENSATION TO FORM ELASTOMERS

(30) Priorité: 22.12.1998 FR 9816467
(43) Date de publication de la demande: 10.10.2001
(73) Titulaire: RHODIA CHIMIE, 92408 Courbevoie Cédex (FR)
(72) Inventeur: CANPONT, Dominique, F-69600 Oullins (FR); HOWE, Fabienne, F-69300 Caluire (FR); POUCHELON, Alain, F-69330 Meyzieu (FR)
(74) Mandataire: Trolliet, Maurice
(86) Numéro de dépôt international: FR9903212
(87) Numéro de publication internationale: WO00037549

(56) Documents cités:
- GB-A- 2 287 248

## Description

Le domaine de l'invention est celui des compositions organopolysiloxanes réticulables ou durcissables en élastomères silicones par des réactions de polycondensation dont les principaux composants sont un ou plusieurs organopolysiloxane(s) réactif(s) et des charges.

Plus précisément, la présente invention est relative à la préparation d'un produit intermédiaire utile pour l'obtention de ces élastomères silicones et constitué par une suspension de charge renforçante dans au moins un polyorganosiloxane réactif porteur de fonctions condensables ou hydrolysables, comme par exemple ≡Si-OH, susceptibles de réagir entre elles et/ou avec un agent réticulant choisi parmi les composés organosiliciques portant plus de deux fonctions condensables ou hydrolysables. La présente invention concerne encore la préparation de compositions organopolysiloxanes réticulables ou durcissables en élastomères silicones par des réactions de polycondensation comprenant, comme élément constitutif, ladite suspension de charge renforçante.

On distingue des charges renforçantes et non renforçantes dans les élastomères silicones.

Les charges renforçantes les plus couramment utilisées sont les silices pyrogénées et les silices de précipitation ayant une surface BET > 40 m²/g. Ce sont des poudres ultrafines qui doivent leur effet de renforcement d'une part à leur morphologie et d'autre part aux liaisons hydrogènes qui se forment entre les groupes silanols sur la surface des silices (3-6 groupes SiOH /nm²) et les chaînes polyorganosiloxanes (POS). Ces interactions entre la charge et le polymère augmentent la viscosité et modifient le comportement du polymère au voisinage de la surface solide des charges. Par ailleurs, les liaisons entre polymères et charges améliorent les propriétés mécaniques mais peuvent également provoquer un durcissement prématuré préjudiciable (« structuration ») des compositions précurseurs des élastomères.

Les charges non renforçantes ont une interaction extrêmement faible avec le polymère silicone. Il s'agit par exemple de la craie, de la poudre de quartz, de la terre de diatomées, du mica, du kaolin, des alumines ou des oxydes de fer. Leur effet est souvent d'augmenter la viscosité des précurseurs non réticulés des élastomères, ainsi que la dureté Shore et le module d'élasticité de ces derniers.

Les compositions capables de conduire à des élastomères silicones renferment également des catalyseurs, des réticulants, et éventuellement des pigments, des agents antiadhésifs, des plastifiants et/ou des promoteurs d'adhérence.

Ces élastomères réticulables par polycondensation et dénommés également élastomères RTV de polycondensation, sont façonnés avant réticulation par coulée, extrusion, calandrage ou moulage par compression, par injection ou par transfert.

Les compositions silicones réticulables ou durcissables en élastomères par polycondensation à température ambiante ou à des températures plus élevées (< généralement à 100° C), sont classiquement conditionnées sous forme de systèmes monocomposants (c'est-à-dire comprenant un seul emballage) ou de systèmes bi-composants (c'est-à-dire comprenant deux parties emballées séparément et devant être mélangées au moment de l'emploi).

Dans les systèmes bi-composants, l'un des composants comprend le catalyseur de la réaction de polycondensation. Ce catalyseur peut être un composé métallique, comme par exemple un composé organique de l'étain. Ce composant comportant le catalyseur peut comprendre également l'agent réticulant.

De telles compositions peuvent aussi être présentées sous forme de systèmes monocomposants qui réticulent dès la température ambiante en présence d'eau.

La préparation de suspensions concentrées (empâtages) de silices renforçantes dans des huiles silicones réactives destinées à produire des élastomères réticulés par polycondensation pose des problèmes de mélange de la charge pulvérulente avec l'huile et l'on doit particulièrement veiller à obtenir une distribution uniforme des charges dans la suspension.

Une autre difficulté à surmonter est liée à la rhéologie des suspensions préparées. En effet, il est clair que l'introduction dans l'huile silicone d'une charge particulaire pulvérulente de très faible granulométrie, induit nécessairement une augmentation notable de la viscosité. Or cette caractéristique, bien qu'elle accompagne l'obtention de bonnes propriétés mécaniques pour les élastomères silicones réticulés comprenant la suspension comme matière première, est préjudiciable à la manipulation et au façonnage de la suspension et des compositions silicones en contenant. Il est en effet plus commode de manipuler pour le moulage, l'extrusion ou le façonnage, des compositions fluides qui se prêtent aisément au pompage, à l'écoulement ou au mélange avec des additifs fonctionnels, entre autres.

La problématique ici considérée peut donc se résumer comme la recherche d'un compromis technique entre des spécifications, a priori antinomiques, pour les suspensions de charges particulaires fines dans les huiles silicones, à savoir : (i) la finesse de distribution des particules dans la matrice silicone ; (2i) l'adaptation de la rhéologie de la suspension aux contraintes de manipulation et (3i) le niveau des propriétés mécaniques des élastomères silicones réticulés.

Le document FR-A-2.717.180 s'inscrit dans cette problématique et décrit un procédé de préparation de compositions chargées bicomposantes, réticulables en élastomères par des réactions de polycondensation, dont la caractéristique réside dans le fait que la charge employée, se trouvant être habituellement une charge siliceuse, qui est mélangée avec le POS réactif porteur de fonctions condensables, est traitée avant son incorporation dans la composition par un agent de compatibilisation, notamment de type silazane, en réalisant impérativement et exclusivement ce traitement au sein d'un POS non réactif, en particulier un polydialkylsiloxane à terminaisons trialkylsilyle. Ce mode de traitement peut être réalisé en deux temps, en mélangeant tout d'abord le POS non réactif et la charge avec une fraction de l'agent de traitement et, après homogénéisation de ce premier mélange, en lui incorporant l'agent de traitement restant. Ce mode de traitement fournit des suspensions de charges relativement fluides, mais la Demanderesse est d'opinion qu'il n'est pas sans avoir des conséquences indésirables au niveau des élastomères préparés à partir des compositions comprenant cette suspension : il y a lieu de craindre en effet que le POS non réactif, qui n'est pas lié à la surface de la silice et, de ce fait, se trouve mal accroché au réseau silicone crée au cours de la réticulation, peut exsuder des pièces en élastomère réalisées.

Dans une tel contexte technique, l'un des objectifs essentiel de la présente invention est de fournir un procédé de préparation d'une suspension d'une charge particulaire traitée à l'aide d'un agent de compatibilisation, dans une huile silicone, cette suspension pouvant être utile comme matière première pour l'élaboration de compositions réticulables ou durcissables par des réactions de polycondensation en élastomère RTV de polycondensation, ledit procédé se devant de satisfaire au cahier des charges suivant :
- uniformisation et homogénéisation de la distribution de la charge dans l'huile silicone,
- optimisation de la dispersion,
- suspension s'écoulant bien (sans seuil d'écoulement) et viscosité adaptée à la manipulation et à la transformation de la suspension,
- bonne stabilité au stockage (coulabilité, viscosité, temps de prise) des compositions durcissables comprenant la suspension,
- propriétés mécaniques (en particulier, allongement à la rupture, résistance à la déchirure) des élastomères d'un niveau acceptable.

Un autre objectif essentiel de l'invention est de fournir un procédé de préparation d'une suspension charge renforçante/huile silicone pour élastomères RTV de polycondensation, qui soit simple à mettre en oeuvre, économique et applicable à l'échelle industrielle.

Un autre objectif essentiel de l'invention est de fournir un procédé d'obtention d'une composition silicone réticulable ou durcissable par polycondensation, comprenant comme élément constitutif la suspension telle qu'obtenue par le procédé visé ci-dessus, ayant une bonne stabilité au stockage et conduisant à des élastomères ayant des propriétés mécaniques d'un niveau acceptable, que cette composition se présente sous la forme d'une composition monocomposante ou sous celle d'une composition bi-composante.

Ces objectifs, parmi d'autres, sont atteints par la présente invention qui concerne un procédé de préparation d'une suspension d'une charge renforçante particulaire, de préférence de nature siliceuse, dans une matière silicone (MS) :
+ ladite MS comprenant :
   - au moins un POS réactif linéaire portant à chaque extrémité de chaîne au moins deux groupes condensables (autres que OH) ou hydrolysables, ou un seul groupe hydroxy,
   - éventuellement au moins un POS non réactif linéaire ne portant pas de groupe condensable, hydrolysable ou hydroxy,
   - éventuellement de l'eau,
+ ladite suspension étant, notamment, utilisable pour produire des compositions silicones réticulables ou durcissables par polycondensation,
+ ledit procédé étant du genre de ceux dans lesquels la charge renforçante particulaire est traitée à l'aide d'un agent de compatibilisation (AC), et étant caractérisé en ce qu'il consiste essentiellement à introduire de l'agent de compatibilisation (AC) dans le milieu de préparation de la suspension :
   - d'une part, avant et/ou sensiblement simultanément à l'incorporation, dans au moins une partie de la matière silicone MS mise en oeuvre, de la charge renforçante particulaire utilisée, cette introduction d'AC s'opérant avec une fraction d'AC correspondant à une proportion se situant dans l'intervalle allant de 8 % à 30 % en poids sec par rapport à la charge renforçante renforçante particulaire ;
   - et d'autre part, après cette incorporation de la charge dans au moins une partie de la MS.

Il est du mérite des inventeurs d'avoir mis en évidence, après de nombreuses recherches et expérimentations, qu'il convenait de manière tout à fait surprenante et inattendue d'introduire l'agent de comptabilisation (comme par exemple l'hexaméthyldisilazane appelé HMDZ) avant et après l'incorporation de la charge renforçante dans au moins une partie de la matière silicone MS, avec la condition selon laquelle la fraction d'agent de comptabilisation AC introduite avant l'incorporation de la charge représente de 8 % à 30 % en en poids de la charge renforçante utilisée.

Ces modalités originales et avantageuses permettent d'obtenir des suspensions douées de qualités rhéologiques et d'un comportement viscoélastique appropriés. En effet, ces suspensions n'ont pas de seuil d'écoulement ou un très faible seuil qui n'est pas préjudiciable aux applications. Cela favorise considérablement leur mise en oeuvre. En particulier, elles ont une fluidité stable dans le temps et adaptée aux opérations de manipulation et de transformation, telles que le pompage, l'acheminement, le mélange, le façonnage, le moulage, l'extrusion, etc.

L'un des intérêts majeurs de l'invention est que cet acquis sur le plan de la rhéologie, n'existe pas au détriment des propriétés mécaniques finales de l'élastomère réticulé. Le compromis technique est atteint.

Par ailleurs, la méthodologie retenue permet d'obtenir des dispersions homogènes de la charge renforçante particulaire dans la MS. De plus, cette méthodologie ne complique pas significativement le procédé, qui reste simple à mettre en oeuvre et peu onéreux.

La charge renforçante particulaire habituellement utilisée consiste dans une charge siliceuse. A titre de charges siliceuses susceptibles d'être mises en oeuvre, conviennent toutes les silices précipitées ou pyrogénées (ou silices de combustion) connues de l'homme de l'art. Bien entendu, on peut utiliser aussi des coupages de différentes silices.

On préfère les silices de précipitation et/ou les silices de combustion ayant une surface spécifique BET supérieure à 40 m²/g et, plus précisément comprise entre 50 et 300 m²/g. A titre plus préférentiel, on utilise les silices de combustion ayant les caractéristiques de surface spécifique mentionnées ci-avant. A titre encore plus préférentiel, on utilise les silices de combustion ayant une surface spécifique BET comprise entre 170 et 230 m²/g. Généralement, cette charge renforçante présente une dimension moyenne des particules inférieure à 0,1 µm.

L'agent de compatibilisation (AC) est choisi parmi les organosilazanes et les cycloorganosilazanes, qui sont liquides à une température de 23°C et sous une pression de 1010,8.10²Pa, ces composés étant utilisés seuls ou en mélange entre eux. Il peut s'agir de composés tels que l'hexaméthyldisilazane, le divinyl-1,3 tétraméthyl-1,1,3,3 disilazane, l'hexaméthylcyclotrisilazane, l'octaméthylcyclotétrasilazane et des mélanges de ces composés. On préfère l'hexaméthyldisilazane.

Conformément à l'un de ces modes préférés de mise en oeuvre, le procédé selon l'invention comprend les étapes suivantes :
- on mélange dans un ordre quelconque, en réalisant éventuellement un pré-mélange du (ou des) POS avec l'agent de compatibilisation AC et éventuellement l'eau :
   - (100-v-w) parties en poids d'au moins un POS réactif et éventuellement d'au moins un POS non réactif,
   - 0 à 5 parties en poids d'eau,
   - 10 à 50 parties en poids de charge renforçante particulaire,
   - et une première fraction d'AC représentant 8 % à 30 % et, de préférence, 10 % à 25 % du poids sec de la charge renforçante ;
- on introduit au mélange une seconde fraction d'AC représentant 2 % à 25 % et, de préférence, 5 % à 20 % du poids sec de la charge renforçante ;
- on laisse réagir en poursuivant le mélange ;
- on chauffe le mélange en choisissant un couple pression/température de telle sorte que se produise une dévolatilisation des éléments volatils et d'au moins une partie de l'eau éventuellement présente ;
- on laisse éventuellement refroidir le mélange dévolatilisé ;
- et on complète éventuellement la suspension avec le reste du (ou des) POS réactif(s) (v parties en poids) et/ou avec, éventuellement, le reste du (ou des) POS non réactif(s) (w parties en poids) ;
ledit procédé comprenant les éléments de définition supplémentaires ci-après listés :
- la quantité du (ou des) POS non réactif(s), quand on en utilise, se situe dans l'intervalle allant de 1 à 100 parties en poids et, de préférence, 30 à 80 parties en poids pour 100 parties du (ou des) POS réactif(s) ;
- la quantité totale d'agent de compatibilisation AC est comprise entre 10 et 45 % du poids de la charge renforçante et, de préférence, entre 15 % et 40 % ;
- le symbole v va de zéro à 60 parties en poids et, de préférence de zéro à 50 parties en poids ;
- le symbole w va de zéro à 50 parties en poids et, de préférence de zéro à 40 parties en poids;
- la somme v + w va de zéro à 60 parties en poids et, de préférence de zéro à 50 parties en poids.

En d'autres termes, le procédé selon l'invention permet d'accéder à un contrôle de la viscosité de la suspension tout en maintenant à un niveau acceptable (voire en améliorant) les propriétés mécaniques de l'élastomère final obtenu à partir de la suspension.

Les opérations de mélange sont réalisées à l'aide de dispositifs connus et appropriés. Il peut s'agir par exemple :
- de mélangeurs à bras,
- de mélangeurs internes,
- de mélangeurs planétaires,
- de mélangeurs à pales en soc de charrue,
- de mélangeurs à double arbre co ou contra rotatif,
- de mélangeurs extrudeurs continus,
- ou d'autres dispositifs discontinus ou continus.

Les opérations de mélange s'effectuent à température et à pression normales et de préférence sous atmosphère inerte (par exemple sous N₂). Il convient que dans ces conditions, les POS utilisés et également l'agent de comptabilisation se trouvent sous forme liquide pour faciliter le mélange.

La charge renforçante particulaire représente de 8 % à 40 % en poids de la suspension. En pratique, cette charge est de l'ordre de 28 ± 10 %.

Pour définir plus précisément, sans toutefois que cela ne soit limitatif, le mode préféré de mise en oeuvre du procédé selon l'invention, on peut indiquer que celui-ci comprend, dans une première variante, les étapes suivantes :

Suivant un premier mode particulier de mise en pratique du procédé de l'invention, celui-ci comprend les étapes suivantes :
- 1 - on procède à l'homogénéisation d'un mélange comprenant tout ou partie de l'huile silicone, l'eau et la première fraction d'AC,
- 2 - on ajoute progressivement la charge renforçante particulaire, au mélange obtenu en 1,
- 3 - on poursuit le mélange sans chauffer,
- 4 - on incorpore progressivement au mélange obtenu en 3, la deuxième fraction d'AC,
- 5 - on poursuit le mélange sans chauffer,
- 6 - on dévolatilise, de préférence par chauffage à une température ≥ 100° C sous une pression inférieure à la pression atmosphérique ou sous balayage d'un gaz inerte comme par exempte l'azote,
- 7 - on laisse éventuellement refroidir le mélange dévolatilisé,
- 8 - et on complète éventuellement la suspension avec le reste d'huile silicone.

Dans l'étape 1 de la première variante comme dans l'étape 1' de la seconde variante décrite ci-après, s'agissant de l'expression "tout ou partie de l'huile silicone", on entend définir les trois alternatives suivantes, parmi d'autres :
(i) soit on met en oeuvre la totalité du (ou des) POS réactif(s) et éventuellement la totalité du (ou des) POS non réactif(s),
(2i) soit on met en oeuvre une partie du (ou des) POS réactif(s) et éventuellement la totalité du (ou des) POS non réactif(s),
(3i) soit on met en oeuvre une partie du (ou des) POS réactif(s) et éventuellement une partie du (ou des) POS non réactif(s).

Selon la deuxième variante du mode préféré de mise en oeuvre du procédé selon l'invention, ce dernier comprend les étapes suivantes :
- 1' - on procède à l'homogénéisation d'un mélange comprenant tout ou partie de l'huile silicone et de l'eau,
- 2' - on incorpore progressivement dans le mélange obtenu en 1', la charge renforçante particulaire et simultanément la première fraction d'AC,
- 3 - on poursuit le mélange sans chauffer,
- 4 - on incorpore progressivement au mélange obtenu en 3, la deuxième fraction d'AC,
- 5 - on poursuit le mélange sans chauffer,
- 6 - on dévolatilise, de préférence par chauffage à une température ≥ 100° C sous une pression inférieure à la pression atmosphérique ou sous balayage d'un gaz inerte comme par exemple l'azote,
- 7 - on laisse éventuellement refroidir le mélange dévolatilisé,
- 8 - et on complète éventuellement la suspension avec le reste d'huile silicone.

La caractéristique de cette deuxième variante est liée au fait que l'on procède à une co-addition de la charge renforçante particulaire et de la première fraction de son agent de comptabilisation. On peut donc imaginer réaliser un pré-mélange de ces deux constituants ou alternativement une introduction concomitante de ceux-ci.

Selon une troisième variante du mode préféré de mise en oeuvre du procédé selon l'invention, qui correspond à la modalité de mise en oeuvre très préférentielle, ledit procédé comprend les étapes suivantes :
- 1" - on procède à l'homogénéisation d'un mélange comprenant une partie du (ou des) POS réactif(s), la totalité du (ou des) POS non réactif(s), l'eau et la première fraction d'AC,
- 2 - on ajoute progressivement la charge renforçante particulaire au mélange obtenu en 1",
- 3 - on poursuit le mélange sans chauffer,
- 4 - on incorpore progressivement au mélange obtenu en 3, la deuxième fraction d'AC,
- 5 - on poursuit le mélange sans chauffer,
- 6- on dévolatilise, de préférence par chauffage à une température ≥ 100° C sous une pression inférieure à la pression atmosphérique ou sous balayage d'un gaz inerte comme par exemple l'azote,
- 7 - on laisse éventuellement refroidir le mélange dévolatilisé,
- 8 - et on complète la suspension avec le reste de (ou des) POS réactif(s) (dans cette variante : le symbole w défini supra est égal à zéro et le symbole v défini supra est différent de zéro et ≤ 60 parties en poids et, de préférence ≤ 50 parties en poids.

Pour définir d'une autre manière la quantité totale d'AC utilisée dans la modalité préférée où la charge renforçante est de la silice et l'agent AC est de l'HMDZ, on peut indiquer que cette quantité totale d'HMDZ est suffisante pour mettre en oeuvre au moins une mole d'HMDZ pour une mole de groupe SiOH situé à la surface de la silice.

S'agissant des polyorganosiloxanes (POS) mis en oeuvre dans le procédé de l'invention, on choisira généralement des POS linéaires.

Pour ce qui concerne les POS réactifs, il s'agira d'huiles répondant à la formule (1) suivante : 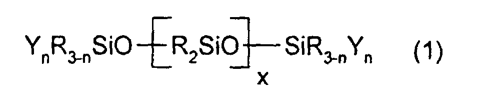 dans laquelle :
+ R représente des radicaux hydrocarbonés monovalents identiques ou différents, et Y représente des groupes hydrolysables ou condensables (autres que OH) identiques ou différents, ou un groupe hydroxy,
+ n est choisi parmi 1, 2 et 3 avec n = 1, quand Y est un hydroxy, et x a une valeur suffisante pour conférer aux huiles de formule (1) une viscosité dynamique à 25°C comprise entre 1.000 et 200.000 mPa.s et, de préférence entre 5.000 et 80.000 mPa.s.

Comme exemples de radicaux R, on peut citer les radicaux alkyle ayant de 1 à 8 atomes de carbone tels que méthyle, éthyle, propyle, butyle, hexyle et octyle, les radicaux phényle.

Comme exemples de radicaux R substitués, on peut citer les radicaux trifluoro-3,3,3 propyle, chlorophényle et bétacyanoéthyle.

A titre illustratif de motifs représentés par la formule R₂SiO peuvent être cités ceux de formules :

(CH₃)₂SiO ; CH₃(C₆H₅)SiO ; (C₆H₅)₂SiO ;

CF₃CH₂CH₂(CH₃)SiO ; NC-CH₂CH₂(CH₃)SiO.

Dans les produits de formule (1) généralement utilisés industriellement, au moins 80 % en nombre des radicaux R sont des radicaux méthyle, les autres radicaux peuvent être généralement des radicaux phényle.

Comme exemple de groupes Y hydrolysables, on peut citer les groupes amino, acylamino, aminoxy, cétiminoxy, iminoxy, énoxy, alcoxy, alcoxy-alkylène-oxy, acyloxy et phosphato et, par exemple, parmi ceux-ci :
- pour les groupes Y amino : groupes n-butylamino, sec-butylamino et cyclohexylamino,
- pour les groupes acylamino N substitué : le groupe benzoyl-amino,
- pour les groupes aminoxy : les groupes diméthylaminoxy, diéthylaminoxy, dioctylaminoxy et diphénylaminoxy,
- pour les groupes iminoxy et cétiminoxy : ceux dérivés de l'acétophénone-oxime, l'acétone-oxime, la benzophénone-oxime, la méthyl-éthyl cétoxime, la diisopropylcétoxime et la chlorocyclohexanone-oxime,
- pour les groupes Y alcoxy : les groupes ayant de 1 à 8 atomes de carbone comme les groupes méthoxy, propoxy, isopropoxy, butoxy, hexyloxy et octyloxy,
- pour les groupes Y alcoxy-alkylène-oxy : le groupe méthoxy-éthylène-oxy,
- pour les groupes Y acyloxy : les groupes ayant de 1 à 8 atomes de carbone comme les groupes formyloxy, acétoxy, propionyloxy et éthyl-2 hexanoyloxy,
- pour les groupes Y phosphate : ceux dérivant des groupes phosphates de diméthyle, phosphate de diéthyle et phosphate de dibutyle.

Comme groupes Y condensables, on peut citer les atomes d'hydrogène et les atomes d'halogène, de préférence le chlore.

Les POS réactifs utilisés de préférence sont les diorganopolysiloxanes α, ω-dihydroxylés de formule (1) dans laquelle Y = OH, n = 1 et x a une valeur suffisante pour conférer aux polymères une viscosité dynamique à 25°C comprise entre 1.000 et 200.000 mPa.s et, de préférence, entre 5.000 et 80.000 mPa.s.

Pour ce qui concerne les POS non réactifs, il s'agira d'huiles répondant à la formule (2) suivante : 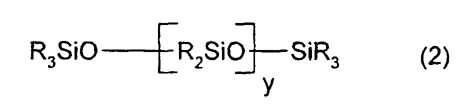 dans laquelle les substituants R, identiques ou différents, ont les mêmes significations générales ou particulières que celles données ci-avant pour les POS réactifs de formule (1), et le symbole y a une valeur suffisante pour conférer aux polymères une viscosité dynamique à 25°C comprise entre 10 et 10.000 mPa.s et, de préférence, entre 30 et 2.000 mPa.s.

Il doit être compris que, dans le cadre de la présente invention, on peut utiliser comme POS hydroxylés de formule (1) un mélange constitué de plusieurs polymères hydroxylés qui diffèrent entre eux par la valeur de la viscosité et/ou la nature des substituants liés aux atomes de silicium. Il doit être indiqué de plus que les polymères hydroxylés de formule (1) peuvent éventuellement comprendre, à côté des motifs D de formule R₂SiO, des motifs T de formule RSiO_{3/2} et/ou des motifs SiO₂ dans la proportion d'au plus 1 % (ces % exprimant le nombre de motifs T et/ou Q pour 100 atomes de silicium). Les mêmes remarques s'appliquent aux POS non réactifs de formule (2).

La vocation de la suspension d'une charge renforçante dans une matière silicone MS préparée conformément à l'invention est d'être utilisée dans l'obtention de compositions silicones, liquides ou pâteuses, réticulables ou durcissables par polycondensation en élastomère silicone RTV de polycondensation dans l'atmosphère ambiante à température normale ou à température plus élevée.

C'est ainsi que selon un autre de ces aspects, la présente invention concerne un procédé d'obtention d'une composition organopolysiloxane réticulable ou durcissable par polycondensation, caractérisé en ce qu'il consiste à mélanger les produits suivants :
- A - la suspension telle que préparée selon le procédé défini supra ;
- B - éventuellement une ou plusieurs charge(s) semi-renforçante(s), non renforçante(s) ou de bourrage ;
- C - éventuellement de l'eau ;
- D - éventuellement un ou plusieurs POS réactif(s) linéaire(s) portant à chaque extrémité de chaîne au moins deux groupes condensables ou hydrolysables, ou un seul groupe hydroxy, comme les POS réactifs de formule (1) tels que définis supra ;
- E - éventuellement un ou plusieurs POS réactif(s) de formule (1) dans laquelle x a une valeur suffisante pour conférer aux polymères une viscosité dynamique à 25°C comprise entre 30 et 500 mPa.s et, de préférence, entre 35 et 100 mPa.s ;
- F - éventuellement un ou plusieurs POS non réactif(s) linéaire(s) ne portant pas de groupe condensable hydrolysable ou hydroxy, comme les POS non réactifs de formule (2) tels que définis supra ;
- G - un ou plusieurs agent(s) réticulant(s) choisi(s) parmi :
   - un silane de formule générale :

      R₄₋ₐSiY'ₐ (3)

      dans laquelle :
      - les substituants R, identiques ou différents, ont les mêmes significations générales ou particulières que celles données ci-avant dans la formule (1),
      - les symboles Y', identiques ou différents, représentent les mêmes groupes hydrolysables ou condensables que ceux mentionnés ci-avant à propos des groupes Y de la formule (1),
   - les produits d'hydrolyse partielle d'un silane de formule (3),
   ledit ingrédient G étant obligatoire quand le (ou les) POS réactif(s) sont des POS α,ω-dihydroxylés, et facultatif (mais souhaitable) quand le (ou les) POS réactif(s) portent à chaque extrémité de chaînes des groupes condensables (autres que OH) ou hydrolysables ;
- H - un catalyseur de réticulation ou de durcissement par polycondensation ;
- I - éventuellement un ou plusieurs additif(s) choisi(s) parmi des pigments, des plastifiants, d'autres modificateurs de rhéologie, des stabilisants et/ou des promoteurs d'adhérence.

Pour ce qui concerne les charges B, elles ont généralement un diamètre particulaire supérieur à 0,1 µm et sont choisies de préférence parmi le quartz broyé, les zirconates, les argiles calcinées, les terres de diatomées, le carbonate de calcium, des alumines. On utilise de 0 à 60 parties en poids et, de préférence, de 10 à 50 parties en poids de charge(s) B pour 100 parties en poids de la totalité de POS réactif(s) (POS de la suspension + ingrédients D et E).

Pour ce qui concerne l'eau C, la quantité utilisée va de 0 à 2 parties en poids et, de préférence, de 0 à 1 partie en poids pour 100 parties en poids de la totalité de POS réactif(s). Cet apport d'eau n'est pas nécessaire si la suspension de charge renforçante en contient suffisamment.

Pour ce qui concerne les POS réactifs D, quand on en utilise, la quantité utilisée représente 20 % à 70 % et, de préférence, 30 % à 60 % du poids de la totalité de POS réactif(s).

Pour ce qui concerne les POS réactifs E de basse viscosité, la quantité utilisée représente 0 % à 10 % et, de préférence, 0,5 % à 5 % du poids de la totalité de POS réactif(s).

Pour ce qui concerne les POS non réactifs F de basse viscosité, la quantité utilisée représente 0 à 40 parties en poids et, de préférence, de 0 à 30 parties en poids pour 100 parties en poids de la totalité de POS réactif(s).

Comme exemples de silanes monomères G, on peut citer plus particulièrement les polyacyloxysilanes, les polyalcoxysilanes, les polycétiminoxysilanes et les polyiminoxysilanes, et en particulier les silanes suivants :
CH₃Si(OCOCH₃)₃ ; C₂H₅Si(OCOCH₃)₃;
(CH₂=CH)Si(OCOCH₃)₃ ; C₆H₅Si(OCOCH₃)₃ ; CF₃CH₂CH₂Si(OCOCH₃)₃ ;
NC-CH₂CH₂Si(OCOCH₃)₃ ; CH₂ClSi(OCOCH₂CH₃)₃;
CH₃Si[ON=C(CH₃)C₂H₅]₂ (OCH₂CH₂OCH₃) ;
CH₃Si[ON=CH-(CH₃)₂]₂ (OCH₂CH₂OCH₃) ;
Si(OC₂H₅)₄ ; Si(O-n-C₃H₇)₄ ; Si(O-isoC₃H₇)₄ ; Si(OC₂H₄OCH₃)₄ ;
CH₃Si(OCH₃)₃ ; CH₂=CHSi(OCH₃)₃ ; CH₃Si(OC₂H₄OCH₃)₃ ;
CICH₂Si(OC₂H₅)₃ ; CH₂=CHSi(OC₂H₄OCH₃)₃.

Les produits d'hydrolyse partielle, par exemple, des polyalcoxysilanes, appelés habituellement polysilicates d'alkyle, sont des produits bien connus. Le produit le plus couramment utilisé est le polysilicate d'éthyle 40 ® issu de l'hydrolyse partielle de Si(OC₂H₅)₄.

Les agents réticulants G utilisés de préférence dans le cas de l'emploi préféré de POS α, ω-dihydroxylés de formule (1), sont les alkyltrialcoxysilanes et les tétraalcoxysilanes de formule (3) où R représente un radical alkyle ayant de 1 à 4 atomes de carbone, et les produits d'hydrolyse partielle de ces silanes préférés.

Quand on utilise au moins un agent réticulant G, la quantité est généralement comprise entre 0,5 et 20 parties en poids et, de préférence, entre 1 et 10 parties en poids pour 100 parties en poids de la totalité de POS réactif(s).

Les compositions silicones réticulables par polycondensation en élastomère conviennent généralement de 0,01 à 10 parties en poids de catalyseur H et, de préférence, de 0,001 à 5 parties en poids de catalyseur H pour 100 parties en poids de la totalité de POS réactif(s).

Selon une première variante du procédé d'obtention d'une composition silicone réticulable ou durcissable par polycondensation en élastomère, on produit une composition monocomposante (c'est-à-dire à un seul emballage) destinée à réticuler en présence d'humidité, en particulier d'humidité apportée par l'air ambiant ou par l'eau présente et/ou ajoutée au sein de la composition, à la température ambiante et/ou sous l'effet de la température pouvant aller, par exemple de 25°C à une valeur inférieure à 100°C. Dans ce cas, le catalyseur de réticulation H utilisé est un catalyseur métallique qui est choisi de préférence parmi des monocarboxylates d'étain, des dicarboxylates de diorganoétain, un chélate d'étain de valence IV, un chélate d'étain de valence IV hexacoordiné, un dérivé organique du titane, un dérivé organique du zirconium. La teneur en catalyseur des compositions monocomposantes est comprise généralement entre 0,001 et 0,1 partie en poids pour 100 parties en poids de la totalité de POS réactif(s).

Selon une seconde variante du procédé de préparation de compositions réticulables en élastomères :
- on produit chaque composition sous forme d'un système à deux composants (ou à deux emballages) C1 et C2, destinés à être mis en contact l'un avec l'autre pour conduire à un élastomère RTV de polycondensation,
- et on fait en sorte que l'une seulement des parties C1 ou C2 contienne le catalyseur H et éventuellement le (ou les) agent(s) réticulant(s) G.

Dans le cas des compositions à deux composants, le catalyseur H utilisé est de préférence un dérivé organique de l'étain tel que défini supra, une amine ou un mélange de ces espèces. La teneur en catalyseur des compositions à deux composants est comprise généralement entre 0,1 et 5 parties en poids pour 100 parties en poids de la totalité de POS réactif(s).

Les exemples qui suivent illustrent :
- la préparation des suspensions de charge renforçante dans une matière silicone, conformes à l'invention,
- l'application de ces suspensions comme matière première pour l'obtention de compositions bi-composantes réticulables en élastomères silicones RTV de polycondensation,
- ainsi que l'évaluation des propriétés viscoélastiques des suspensions et des propriétés mécaniques des élastomères réticulés obtenus à partir desdites suspensions.

### EXEMPLES

### Exemple 1

### 1) Préparation d'une suspension selon l'invention, avec introductions de l'agent de compatibilisation avant et après l'incorporation de la charge renforçante.

Dans un mélangeur à bras de 1,5 litres, on introduit à température ambiante (23°C) et dans l'ordre :
- 351 g de POS non réactif sous forme d'une huile polydiméthylsiloxane bloquée à chacune des extrémités de chaînes par un motif (CH₃)₃SiO_{1/2} ayant une viscosité de 50 mPa.s à 25°C,
- 143 g de POS réactif sous forme d'une huile polydiméthylsiloxane hydroxylée bloquée à chacune des extrémités de chaînes par un motif (CH₃)₂(OH)SiO_{1/2}ayant une viscosité de 20.000 mPa.s à 25°C et possédant 0,0527 % en poids de radicaux hydroxyle,
- 22 g d'eau, et
- 55 g d'hexaméthyldisilazane.

Après homogénéisation, réalisée au bout de 30 minutes, on ajoute par portions, en 180 minutes, 338 g d'une silice de combustion caractérisée par sa surface spécifique BET de 200 m²/g.

On poursuit le mélange par agitation, sans chauffer, pendant 60 minutes et, au bout de ce temps, on ajoute encore 33 g d'hexaméthyldisilazane.

On poursuit le mélange par agitation sans chauffer pendant 30 minutes et, au bout de ce temps, on commence une étape de chauffage au cours de laquelle la masse réactionnelle est placée sous une pression inférieure à la pression atmosphérique, de l'ordre de 13 à 40.10²Pa, quand la température atteint environ 80°C ; le chauffage est continué pendant 150 minutes jusqu'à atteindre 120°C, température palier qui est maintenue ensuite pendant 120 minutes.

Au bout de ce temps, le chauffage est arrêté et la pression atmosphérique est rétablie et, lorsque la température est redescendue à environ 65°C, on ajoute en trois portions 377 g du POS réactif défini supra, et on poursuit le malaxage jusqu'à homogénéisation de cette suspension.

On mesure la viscosité de la suspension obtenue :
- au moyen d'un viscosimètre standard du type BROOKFIELD selon les indications de la norme AFNOR-NFT-76106, et
- au moyen d'un rhéomètre dynamique CARRIMED, type CSL, équipé dans une géométrie cone-plan, en opérant dans les conditions suivantes :
   - mode de mesure : oscillation et contrainte imposée,
   - contrainte imposée : 3 Pa,
   - fréquences : 1 Hz,
   - géométrie cone-plan de la mesure : diamètre = 4 cm, angle = 2°.
Comme résultats, on présentera le rapport des valeurs des modules élastiques G' et visqueux G" qui est représentatif du comportement viscoélastique de la suspension.

### 2) Préparation d'une composition organopolysiloxane réticulable par polycondensation, selon l'invention, se présentant sous forme d'un système à deux composants (parties C1 et C2) destinés à être mise en contact l'un avec l'autre pour conduire à un élastomère RTV de polycondensation.

### Partie C1 (mélange de base) :

Dans un mélangeur de laboratoire comprenant un récipient de 0,5 litre et une agitation centrale du type pale, on charge à température ambiante (23°C) et mélange soigneusement les ingrédients suivants :
- 235 g de la suspension obtenue à l'issue de la phase 1) décrite ci-avant,
- 70 g de quartz broyé présentant une granulométrie de 2,5 µm correspondant à son diamètre médian dit "d50",
- 90 g de POS réactif sous forme d'une huile polydiméthylsiloxane hydroxylée bloquée à chacune des extrémités de chaînes par un motif (CH₃)₂(OH)SiO_{1/2} ayant une viscosité de 14.000 mPa.s à 25°C et possédant 0,0646 % en poids de radicaux hydroxyle,
- 1,6 g de POS réactif sous forme d'une huile polydiméthylsiloxane hydroxylée boquée à chacune des extrémités de chaîne par un motif (CH₃)₂(OH)SiO_{1/2} ayant une viscosité de 40 mPa.s à 25°C et possédant 4,93 % en poids de radicaux hydroxyle, et
- 0,4 g d'eau.

### Partie C2 (mélange catalysé) :

Cette partie est obtenue en mélangeant soigneusement les ingrédients suivants : du polysilicate d'éthyle 40® issu de l'hydrolyse partielle de Si(OC₂H₅)₄ (87,5 % en poids) et du dilaurate de di-n-butylétain (12,5 % en poids).

La composition RTV est obtenue par mélange de 100 parties en poids de la partie C1 à 2 parties en poids de la partie C2. La composition RTV se transforme par réticulation au bout de plusieurs heures à température ambiante (23°c) en un élastomère silicone ; les propriétés mécaniques suivantes sont mesurées après 4 jours de réticulation dans une atmosphère régulée à 23°C et à 50 % d'humidité relative :
- dureté Shore A, notée DSA (mesures effectuées selon les indications de la norme DIN-53505) ;
- résistance à la rupture, en MPa, notée R/R, et allongement à la rupture, en %, notée A/R (mesures effectuées selon les indications de la norme AFNOR-NFT-46002) ;
- résistance à la déchirure, en N/mm, notée RD (mesures effectuées selon les indications de la norme ASTM-D-624 A).

### Exemple 2 (exemple comparatif)

### 1) Préparation d'une suspension avec introduction de la totalité de l'agent de compatibilisation après l'incorporation de la charge renforçante.

L'exemple 1, phase 1), est reproduit à ceci près que l'on commence par charger dans le malaxeur 422 g de POS non réactif sous forme d'une huile polydiméthylsiloxane bloquée à chacune des extrémités de chaînes par un motif (CH₃)₃SiO_{1/2} ayant une viscosité de 500 mPa.s à 25°C et 42 g d'eau.

Après homogénéisation, on ajoute par portions, en 180 minutes, 287 g de la silice de combustion.

Après 60 minutes de mélange, on ajoute, en 50 Minutes, 58 g d'hexaméthyldisilazane.

Le malaxage est poursuivi pendant 60 minutes avant de démarrer l'étape où l'on opère un chauffage, puis un chauffage sous pression réduite et un refroidissement, étape qui est la même que précédemment.

Lorsque la température est redescendue à environ 65°C on ajoute en trois portions 279 g de POS réactif sous forme d'une huile polydiméthylsiloxane hydroxylée bloquée à chacune des extrémités de chaînes par un motif (CH₃)₂(OH)SiO_{1/2} ayant une viscosité de 14.000 mPa.s et possédant 0,0646 % en poids de radicaux hydroxyle, et on poursuit le malaxage jusqu'à homogénéisation de cette suspension.

### 2) Préparation de la composition organopolysiloxane bi-composante réticulable par polycondensation.

On opère exactement comme indiqué ci-avant dans l'exemple 1, phase 2).

### Exemple 3 (exemple comparatif)

### 1) Préparation d'une suspension avec introduction de la totalité de l'agent de compatibilisation avant l'incorporation de la charge renforçante.

L'exemple 1, phase 1), est encore reproduit à ceci près que l'on commence par charger dans le malaxeur : 351 g du POS non réactif (viscosité 50 mPa.s), 143 g du POS réactif (viscosité 20.000 mPa.s), 22 g d'eau et 87 g d'hexaméthyldisilazane.

Après 30 minutes d'agitation, 338 g de la silice de combustion sont ajoutés, par portions, en 180 minutes.

On poursuit le mélange par agitation pendant 60 minutes avant de démarrer l'étape où l'on opère un chauffage, puis un chauffage sous pression réduite et un refroidissement, étape qui est la même que précédemment.

Lorsque la température est redescendue à environ 65°C on ajoute en trois portions 377g du POS réactif (viscosité 20.000 mPa.s), et on poursuit le malaxage jusqu'à homogénéisation de cette suspension.

### 2) Préparation de la composition organopolysiloxane bi-composante réticulable par polycondensation.

On opère exactement comme indiqué ci-avant dans l'exemple 1, phase 2).

Les valeurs trouvées, concernant la rhéologie des suspensions et les propriétés mécaniques des élastomères, sont rassemblées dans le tableau suivant :

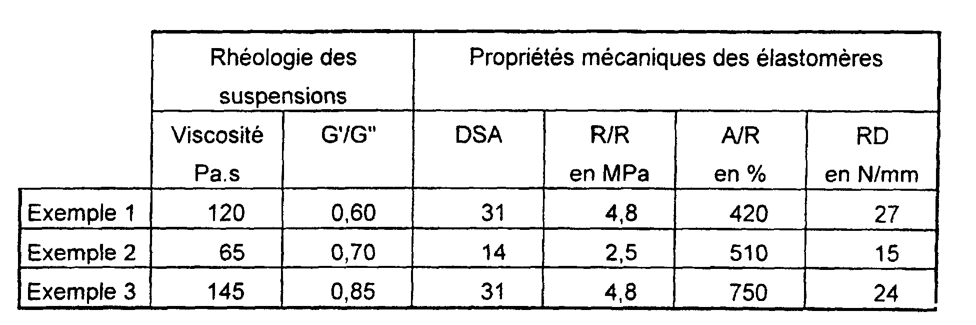

Le traitement en deux temps (avant et après l'incorporation de la charge renforçante) de la charge renforçante par l'agent de compatibilisation (exemple 1) conduit à une suspension dont le comportement rhéologique n'est pas affecté et est typique d'un produit s'écoulant bien, et qui permet la réalisation d'un élastomère ayant de bonnes propriétés mécaniques et, en particulier, une résistance à la déchirure qui est améliorée.

## Revendications

1. Procédé de préparation d'une suspension d'une charge renforçante particulaire dans une matière silicone (MS) :
+ ladite MS comprenant :
- au moins un POS réactif linéaire portant à chaque extrémité de chaîne au moins deux groupes condensables ou hydrolysables, ou un seul groupe hydroxy,
- éventuellement au moins un POS non réactif linéaire ne portant pas de groupe condensable, hydrolysable ou hydroxy,
- éventuellement de l'eau,
+ ladite suspension étant, notamment, utilisable pour produire des compositions silicones réticulables ou durcissables par polycondensation,
+ ledit procédé étant du genre de ceux dans lesquels la charge renforçante particulaire est traitée à l'aide d'un agent de compatibilisation, et étant **caractérisé en ce qu'**il consiste essentiellement à introduire de l'agent de compatibilisation (AC) dans le milieu de préparation de la suspension :
• d'une part, avant et/ou sensiblement simultanément à l'incorporation, dans au moins une partie de la matière silicone MS mise en oeuvre, de la charge renforçante particulaire utilisée, cette introduction d'AC s'opérant avec une fraction d'AC correspondant à une proportion se situant dans l'intervalle allant de 8 % à 30 % en poids sec par rapport à la charge renforçante renforçante particulaire ;
• et d'autre part, après cette incorporation de la charge dans au moins une partie de la MS.

2. Procédé selon la revendication 1, **caractérisé en ce qu'**il comprend les étapes suivantes :
- on mélange dans un ordre quelconque, en réalisant éventuellement un pré-mélange du (ou des) POS avec l'agent de compatibilisation AC et éventuellement l'eau :
• (100-v-w) parties en poids d'au moins un POS réactif et éventuellement d'au moins un POS non réactif,
• 0 à 5 parties en poids d'eau,
• 10 à 50 parties en poids de charge renforçante particulaire,
• et une première fraction d'AC représentant 8 % à 30 % du poids sec de la charge renforçante ;
- on introduit au mélange une seconde fraction d'AC représentant 2 % à 25 % du poids sec de la charge renforçante ;
- on laisse réagir en poursuivant le mélange ;
- on chauffe le mélange en choisissant un couple pression/température de telle sorte que se produise une dévolatilisation des éléments volatils et d'au moins une partie de l'eau éventuellement présente ;
- on laisse éventuellement refroidir le mélange dévolatilisé ;
- et on complète éventuellement la suspension avec le reste du (ou des) POS réactif(s) (v parties en poids) et/ou avec, éventuellement, le reste du (ou des) POS non réactif(s) (w parties en poids) ;
ledit procédé comprenant les éléments de définition supplémentaires ci-après listés :
- la quantité du (ou des) POS non réactif(s), quand on en utilise, se situe dans l'intervalle allant de 1 à 100 parties en poids pour 100 parties du (ou des) POS réactif(s) ;
- la quantité totale d'agent de compatibilisation AC est comprise entre 10 et 45 % du poids de la charge renforçante ;
- le symbole v va de zéro à 60 parties en poids ;
- le symbole w va de zéro à 50 parties en poids ;
- la somme v + w va de zéro à 60 parties en poids.

3. Procédé selon la revendication 1 ou 2, **caractérisé en ce qu'**il comprend les étapes suivantes :
- 1 - on procède à l'homogénéisation d'un mélange comprenant tout ou partie de l'huile silicone, l'eau et la première fraction d'AC,
- 2 - on ajoute progressivement la charge renforçante particulaire, au mélange obtenu en 1,
- 3 - on poursuit le mélange sans chauffer,
- 4 - on incorpore progressivement au mélange obtenu en 3, la deuxième fraction d'AC,
- 5 - on poursuit le mélange sans chauffer,
- 6 - on dévolatilise,
- 7 - on laisse éventuellement refroidir le mélange dévolatilisé,
- 8- et on complète éventuellement la suspension avec le reste d'huile silicone.

4. Procédé selon la revendication 1 ou 2, **caractérisé en ce qu'**il comprend les étapes suivantes :
- 1' - on procède à l'homogénéisation d'un mélange comprenant tout ou partie de l'huile silicone et de l'eau,
- 2' - on incorpore progressivement dans le mélange obtenu en 1', la charge renforçante particulaire et simultanément la première fraction d'AC,
- 3 - on poursuit le mélange sans chauffer,
- 4 - on incorpore progressivement au mélange obtenu en 3, la deuxième fraction d'AC,
- 5 - on poursuit le mélange sans chauffer,
- 6 - on dévolatilise,
- 7 - on laisse éventuellement refroidir le mélange dévolatilisé,
- 8 - et on complète éventuellement la suspension avec le reste d'huile silicone.

5. Procédé selon la revendication 1 ou 2, **caractérisé en ce qu'**il comprend les étapes suivantes :
- 1" - on procède à l'homogénéisation d'un mélange comprenant une partie du (ou des) POS réactif(s), la totalité du (ou des) POS non réactif(s), l'eau et la première fraction d'AC,
- 2 - on ajoute progressivement la charge renforçante particulaire au mélange obtenu en 1",
- 3 - on poursuit le mélange sans chauffer,
- 4 - on incorpore progressivement au mélange obtenu en 3, la deuxième fraction d'AC,
- 5 - on poursuit le mélange sans chauffer,
- 6 - on dévolatilise,
- 7 - on laisse éventuellement refroidir le mélange dévolatilisé,
- 8 - et on complète la suspension avec le reste de (ou des) POS réactif(s).

6. Procédé selon l'une quelconque des revendications 1 à 5, **caractérisé en ce que** la charge renforçante particulaire consiste dans une charge siliceuse choisie dans le groupe formé par les silices de précipitation, les silices de combustion et leurs mélanges, ces silices ayant une surface spécifique BET supérieure à 40 m²/g.

7. Procédé selon l'une quelconque des revendications 1 à 6, **caractérisé en ce que** l'agent compatibilisation AC est choisi parmi les organosilazanes et les cycloorganosilazanes, qui sont liquides à une température de 23°C et sous une pression de 1010,8.10²Pa, ces composés étant utilisés seuls ou en mélange entre eux.

8. Procédé selon l'une quelconque des revendications 1 à 7, **caractérisé en ce que** les POS réactifs répondent à la formule (1) suivante : 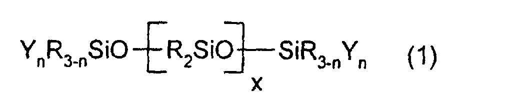 dans laquelle :
+ R représente des radicaux hydrocarbonés monovalents identiques ou différents, et Y représente des groupes hydrolysables ou condensables identiques ou différents, ou un groupe hydroxy,
+ n est choisi parmi 1, 2 et 3 avec n = 1, quand Y est un hydroxy, et x a une valeur suffisante pour conférer aux huiles de formule (1) une viscosité dynamique à 25°C comprise entre 1.000 et 200.000 mPa.s.

9. Procédé selon l'une quelconque des revendications 1 à 8, **caractérisé en ce que** les POS non réactifs répondent à la formule (2) suivante : 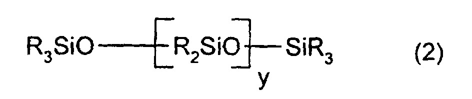 dans laquelle :
+ les substituants R, identiques ou différents, représentent des radicaux hydrocarbonés monovalents,
+ le symbole y a une valeur suffisante pour conférer aux polymères une viscosité dynamique à 25°C comprise entre 10 et 10.000 mPa.s.

10. Procédé d'obtention d'une composition organopolysiloxane réticulable ou durcissable par polycondensation, **caractérisé en ce qu'**il consiste à mélanger les produits suivants :
- A - la suspension telle que préparée selon le procédé défini dans l'une quelconque des revendications 1 à 9 ;
- B - éventuellement une ou plusieurs charge(s) semi-renforçante(s), non renforçante(s) ou de bourrage ;
- C - éventuellement de l'eau ;
- D - éventuellement un ou plusieurs POS réactif(s) tel(s) que défini(s) dans la revendication 1 ou 8 ;
- E - éventuellement un ou plusieurs POS réactif(s) tel(s) que défini(s) dans la revendication 8 où le symbole x de la formule (1) a une valeur suffisante pour conférer aux polymères une viscosité dynamique à 25°C comprise entre 30 et 500 mPa.s ;
- F - éventuellement un ou plusieurs POS non réactif(s) tel(s) que défini(s) dans la revendication 1 ou 9 ;
- G - un ou plusieurs agent(s) réticulant(s) choisi(s) parmi :
• un silane de formule générale :
R₄₋ₐSiY'ₐ (3)
dans laquelle :
- les substituants R, identiques ou différents, ont les mêmes significations que celles données ci-avant dans la formule (1) de la revendication 8,
- les symboles Y', identiques ou différents, représentent les mêmes groupes hydrolysables ou condensables que ceux mentionnés ci-avant à propos des groupes Y de la formule (1) de la revendication 8,
• les produits d'hydrolyse partielle d'un silane de formule (3),
ledit ingrédient G étant obligatoire quand le (ou les) POS réactif(s) sont des POS α,ω-dihydroxylés, et facultatif quand le (ou les) POS réactif(s) portent à chaque extrémité de chaînes des groupes condensables (autres que OH) ou hydrolysables ;
- H - un catalyseur de réticulation ou de durcissement par polycondensation ;
- l - éventuellement un ou plusieurs additif(s) choisi(s) parmi des pigments, des plastifiants, d'autres modificateurs de rhéologie, des stabilisants et/ou des promoteurs d'adhérence.

11. Procédé selon la revendication 10, **caractérisé en ce que** :
- on produit chaque composition sous forme d'un système à deux composants C1 et C2, destinés à être mis en contact l'un avec l'autre pour conduire à un élastomère RTV de polycondensation,
- et on fait en sorte que l'une seulement des parties C1 ou C2 contienne le catalyseur H et éventuellement le (ou les) agent(s) réticulant(s) G.

## Patentansprüche

1. Verfahren zur Herstellung einer Suspension von einem teilchenförmigen, verstärkenden Füllstoff in einer Siliconmatrix (MS),
+ wobei die genannte MS umfaßt:
- mindestens ein lineares reaktives POS, das an jedem Ende der Kette mindestens zwei kondensierbare oder hydrolysierbare Gruppen oder eine einzige Hydroxygruppe trägt,
- gegebenenfalls mindestens ein lineares, nicht reaktives POS, das keine kondensierbare, hydrolysierbare oder Hydroxygruppe trägt,
- gegebenenfalls Wasser,
+ wobei die genannte Suspension insbesondere für die Herstellung von durch Polykondensation vernetzbaren oder härtbaren Silicon-Zusammensetzungen verwendbar ist,
+ wobei das genannte Verfahren von der Art, wo der teilchenförmige, verstärkende Füllstoff mit Hilfe eines Kompatibilisierungsmittels behandelt wird, im wesentlichen **dadurch gekennzeichnet** ist, das Kompatibilisierungsmittel (AC) in das Medium zur Herstellung der Suspension einzutragen
- einerseits vor und/oder etwa gleichzeitig mit dem Eintragen von mindestens einem Teil der eingesetzten Siliconmatrix (MS), des verwendeten teilchenförmigen, verstärkenden Füllstoffes, wobei dieses Eintragen des AC mit einer Fraktion des AC erfolgt, die einem Verhältnis entspricht, das sich im Intervall von 8 % bis 30 % in Trockengewicht befindet, bezogen auf den teilchenförmigen, verstärkenden Füllstoff;
- und andererseits nach diesem Eintragen des Füllstoffes in mindestens einen Teil der MS.

2. Verfahren nach Anspruch 1, **dadurch gekennzeichnet, daß** es die folgenden Stufen umfaßt:
- man vermischt in irgendeiner Reihenfolge, indem man gegebenenfalls eine Vormischung des (oder der) POS mit dem Kompatibilisierungsmittel (AC) und gegebenenfalls Wasser herstellt,
• (100-v-w) Gewichtsteile von mindestens einem reaktiven POS und gegebenenfalls von mindestens einem nicht reaktiven POS,
• 0 bis 5 Gewichtsteile Wasser,
• 10 bis 50 Gewichtsteile des teilchenförmigen, verstärkenden Füllstoffes, und
• eine erste Fraktion des AC, die 8 % bis 30 % des Trockengewichts des verstärkenden Füllstoffes ausmacht;
- man trägt in die Mischung eine zweite Fraktion des AC ein, die 2 % bis 25 % des Trockengewichts des verstärkenden Füllstoffes ausmacht;
- man läßt reagieren, indem man das Mischen fortsetzt;
- man erhitzt die Mischung, indem man ein Paar Druck/Temperatur in der Weise auswählt, daß eine Verflüchtigung der flüchtigen Bestandteile und mindestens eines Teiles des gegebenenfalls anwesenden Wasser stattfindet;
- man läßt die von den flüchtigen Bestandteilen befreite Mischung gegebenenfalls abkühlen; und
- man vervollständigt gegebenenfalls die Suspension mit dem Rest des (oder der) reaktiven POS (v Gewichtsteile) und/oder gegebenenfalls mit dem Rest des (oder der) nicht reaktiven POS (w Gewichtsteile);
wobei das Verfahren die nachstehend aufgeführten Definitionselemente umfaßt:
- die Menge des (oder der) nicht reaktiven POS liegt, wenn man sie verwendet, im Intervall von 1 bis 100 Gewichtsteilen pro 100 Gewichtsteile des (oder der) reaktiven POS;
- die Gesamtmenge von Kompatibilisierungsmittel (AC) liegt zwischen 10 und 45 % des Gewichtes des verstärkenden Füllstoffes;
- das Symbol v beträgt 0 bis 60 Gewichtsteile;
- das Symbol w beträgt 0 bis 50 Gewichtsteile;
- die Summe von v + w beträgt 0 bis 60 Gewichtsteile.

3. Verfahren nach Anspruch 1 oder 2, **dadurch gekennzeichnet, daß** es die folgenden Stufen umfaßt:
- 1 - man führt die Homogenisierung einer Mischung durch, die ganz oder teilweise das Siliconöl, das Wasser und die erste Fraktion des AC umfaßt,
- 2 - man trägt nach und nach den teilchenförmigen, verstärkenden Füllstoff in die in 1 erhaltene Mischung ein,
- 3 - man setzt das Mischen fort, ohne zu erhitzen,
- 4 - man trägt nach und nach die zweite Fraktion des AC in die in 3 erhaltene Mischung ein,
- 5 - man setzt das Mischen fort, ohne zu erhitzen,
- 6 - man verflüchtigt die flüchtigen Bestandteile,
- 7 - man läßt die von den flüchtigen Bestandteilen befreite Mischung gegebenenfalls abkühlen, und
- 8 - man vervollständigt gegebenenfalls die Suspension mit dem Rest des Siliconöles.

4. Verfahren nach Anspruch 1 oder 2, **dadurch gekennzeichnet, daß** es die folgenden Stufen umfaßt:
- 1' - man führt die Homogenisierung einer Mischung durch, die ganz oder teilweise das Siliconöl und das Wasser umfaßt,
- 2' - man trägt nach und nach den teilchenförmigen, verstärkenden Füllstoff und gleichzeitig die erste Fraktion des AC in die in l' erhaltene Mischung ein,
- 3- man setzt das Mischen fort, ohne zu erhitzen,
- 4 - man trägt nach und nach die zweite Fraktion des AC in die in 3 erhaltene Mischung ein,
- 5 - man setzt das Mischen fort, ohne zu erhitzen,
- 6 - man verflüchtigt die flüchtigen Bestandteile,
- 7 - man läßt die von den flüchtigen Bestandteilen befreite Mischung gegebenenfalls abkühlen, und
- 8 - man vervollständigt gegebenenfalls die Suspension mit dem Rest des Siliconöles.

5. Verfahren nach Anspruch 1 oder 2, **dadurch gekennzeichnet, daß** es die folgenden Stufen umfaßt:
- 1" - man führt die Homogenisierung einer Mischung durch, die einen Teil des (oder der) reaktiven POS, die Gesamtheit des (oder der) nicht reaktiven POS, das Wasser und die erste Fraktion des AC umfaßt,
- 2 - man trägt nach und nach den teilchenförmigen, verstärkenden Füllstoff in die in 1" erhaltene Mischung ein,
- 3 - man setzt das Mischen fort, ohne zu erhitzen,
- 4- man trägt nach und nach die zweite Fraktion des AC in die in 3 erhaltene Mischung ein,
- 5- man setzt das Mischen fort, ohne zu erhitzen,
- 6 - man verflüchtigt die flüchtigen Bestandteile,
- 7 - man läßt die von den flüchtigen Bestandteilen befreite Mischung gegebenenfalls abkühlen, und
- 8 - man vervollständigt gegebenenfalls die Suspension mit dem Rest des (oder der) reaktiven POS.

6. Verfahren nach irgendeinem der Ansprüche 1 bis 5, **dadurch gekennzeichnet, daß** der teilchenförmige, verstärkende Füllstoff aus einem siliciumhaltigen Füllstoff besteht, gewählt aus der durch Siliciumdioxid aus der Fällung, Siliciumdioxid aus der Verbrennung und ihren Mischungen gebildeten Gruppe, wobei diese Siliciumdioxide eine spezifische Oberfläche BET von über 40 m²/g besitzen.

7. Verfahren nach irgendeinem der Ansprüche 1 bis 6, **dadurch gekennzeichnet, daß** das Kompatibilisierungsmittel (AC) unter den Organosilazanen und den Cycloorganosilazanen ausgewählt wird, die bei einer Temperatur von 23 °C und unter einem Druck von 1010,8.10² Pa flüssig sind, wobei diese Verbindungen allein oder in Mischung untereinander verwendet werden.

8. Verfahren nach irgendeinem der Ansprüche 1 bis 7, **dadurch gekennzeichnet, daß** die reaktiven POS der folgenden Formel (1) entsprechen: 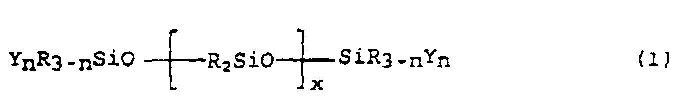 in der
+ R monovalente, gleiche oder verschiedene Kohlenwasserstoffreste darstellt und Y gleiche oder verschiedene, hydrolysierbare oder kondensierbare Gruppen oder eine Hydroxygruppe bedeutet,
+ n ausgewählt wird unter 1, 2 und 3 mit n = 1, wenn Y Hydroxy ist und x einen ausreichenden Wert besitzt, um den Ölen der Formel (1) eine dynamische Viskosität bei 25 °C zwischen 1.000 und 200.000 mPa.s zu verleihen.

9. Verfahren nach irgendeinem der Ansprüche 1 bis 8, **dadurch gekennzeichnet, daß** die nicht reaktiven POS der folgenden Formel (2) entsprechen: 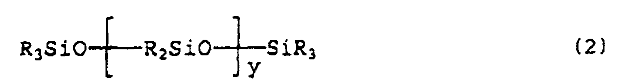 in der
+ die Substituenten R monovalente, gleiche oder verschiedene Kohlenwasserstoffreste darstellen,
+ das Symbol y einen ausreichenden Wert besitzt, um den Polymeren eine dynamische Viskosität bei 25 °C zwischen 10 und 10.000 mPa.s zu verleihen.

10. Verfahren zur Herstellung einer durch Polykondensation vernetzbaren oder härtbaren Organopolysiloxan-Zusammensetzung, **dadurch gekennzeichnet, daß** es darin besteht, die folgenden Produkte zu vermischen:
- A- die Suspension, hergestellt nach dem wie in irgendeinem der Ansprüche 1 bis 9 definierten Verfahren;
- B - gegebenenfalls einen oder mehrere, halb-verstärkende(n), nicht verstärkende(n) oder sonstige Füllstoff(e);
- C - gegebenenfalls Wasser;
- D - gegebenenfalls ein oder mehrere reaktive(s) POS wie in Anspruch 1 oder 8 definiert;
- E - gegebenenfalls ein oder mehrere reaktive(s) POS wie in Anspruch 8 definiert, worin das Symbol x der Formel (1) einen ausreichenden Wert besitzt, um den Polymeren eine dynamische Viskosität bei 25 °C zwischen 30 und 500 mPa.s zu verleihen;
- F - gegebenenfalls ein oder mehrere nicht reaktive(s) POS wie in Anspruch 1 oder 9 definiert;
- G - ein oder mehrere Vernetzungsmittel, ausgewählt unter:
• einem Silan der allgemeinen Formel (3)
R₄₋ₐSiY'ₐ (3)
in der
. die Substituenten R, gleich oder verschieden, die gleichen Bedeutungen besitzen wie oben in der Formel (1) von Anspruch 8 angegeben,
. die Symbole Y', gleich oder verschieden, die gleichen hydrolysierbaren oder kondensierbaren Gruppen darstellen, wie sie oben bei den Gruppen Y der Formel (1) von Anspruch 8 erwähnt wurden,
• den Produkten der partiellen Hydrolyse von einem Silan der Formel (3)
wobei der genannte Bestandteil G obligatorisch ist, wenn das oder die reaktive(n) POS α,ω-dihydroxylierte POS sind, und fakultativ ist, wenn das oder die reaktive(n) POS an jedem Ende der Ketten kondensierbare oder hydrolysierbare Gruppen tragen, die anders sind als OH;
- H - einen Katalysator zur Vernetzung oder Härtung durch Polykondensation;
- I - gegebenenfalls einen oder mehrere Zusatzstoff(e), ausgewählt unter den Pigmenten, den Weichmachern, anderen Mitteln zur Modifizierung der Rheologie, den Stabilisatoren und/oder den Haftvermittlern.

11. Verfahren nach Anspruch 10, **dadurch gekennzeichnet, daß** man
- jede Zusammensetzung in Form eines Systems mit zwei Komponenten C1 und C2 herstellt, die dazu vorgesehen sind, miteinander in Kontakt zu treten, um zu einem Elastomer RTV der Polykondensation zu führen, und
- in der Weise vorgeht, daß nur eines der Teile C1 oder C2 den Katalysator H und gegebenenfalls das oder die Vernetzungsmittel G enthält.

## Claims

1. Process for preparing a suspension of a particulate reinforcing filler in a silicone material (SM) :
+ said SM comprising:
- at least one linear reactive POS bearing at each chain end at least two condensable or hydrolysable groups, or a single hydroxyl group,
- optionally at least one linear unreactive POS not bearing a condensable, hydrolysable or hydroxyl group,
- optionally water,
+ said suspension being usable in particular to produce silicone compositions which may be vulcanized or cured by polycondensation,
+ said process being of the type in which the particulate reinforcing filler is treated with a compatibilizer, and being **characterized in that** it consists essentially in introducing the compatibilizer (CA) into the medium for preparing the suspension:
• firstly, before and/or substantially simultaneously with the incorporation, into at least a portion of the SM silicone material used, of the particulate reinforcing filler used, this introduction of CA being carried out with a fraction of CA corresponding to a proportion within the range from 8% to 30% by dry weight relative to the particulate reinforcing filler; and
• secondly, after this incorporation of the filler into at least a portion of the SM.

2. Process according to Claim 1, **characterized in that** it comprises the following steps:
- the following are mixed together in any order, optionally by preparing a premix of the POS(s) with the compatibilizer CA and optionally the water:
• (100-v-w) parts by weight of at least one reactive POS and optionally of at least one unreactive POS,
• 0 to 5 parts by weight of water,
• 10 to 50 parts by weight of particulate reinforcing filler, and
• a first fraction of CA representing 8% to 30% of the dry weight of the reinforcing filler;
- a second fraction of CA representing 2% to 25% of the dry weight of the reinforcing filler is introduced into the mixture;
- the mixture is left to react, with continued mixing;
- the mixture is heated, choosing a pressure/temperature couple such that a devolatilization of the volatile elements and of at least some of the water which may be present takes place;
- the devolatilized mixture is optionally left to cool; and
- the suspension is optionally completed with the rest of the reactive POS(s) (v parts by weight) and/or, optionally, with the rest of the unreactive POS(s) (w parts by weight);
said process comprising the additional defining elements listed below:
- the amount of the unreactive POS(s), when this/these is (are) used, is within the range from 1 to 100 parts by weight per 100 parts of the reactive POS(s);
- the total amount of compatibilizer CA is between 10% and 45% of the weight of the reinforcing filler;
- the symbol v ranges from zero to 60 parts by weight;
- the symbol w ranges from zero to 50 parts by weight;
- the sum v + w ranges from zero to 60 parts by weight.

3. Process according to Claim 1 or 2, **characterized in that** it comprises the following steps:
-1- a mixture comprising all or some of the silicone oil, the water and the first fraction of CA is homogenized,
-2- the particulate reinforcing filler is gradually added to the mixture obtained in 1,
-3- mixing is continued without heating,
-4- the second fraction of CA is gradually incorporated into the mixture obtained in 3,
-5- mixing is continued without heating,
-6- the mixture is devolatilized,
-7- the devolatilized mixture is optionally left to cool, and
-8- the suspension is optionally completed with the rest of the silicone oil.

4. Process according to Claim 1 or 2, **characterized in that** it comprises the following steps:
-1'- a mixture comprising all or some of the silicone oil and the water is homogenized,
-2'- the particulate reinforcing filler and the first fraction of CA are simultaneously gradually incorporated into the mixture obtained in 1',
-3- mixing is continued without heating,
-4- the second fraction of CA is gradually incorporated into the mixture obtained in 3,
-5- mixing is continued without heating,
-6- the mixture is devolatilized,
-7- the devolatilized mixture is optionally left to cool, and
-8- the suspension is optionally completed with the rest of the silicone oil.

5. Process according to Claim 1 or 2, **characterized in that** it comprises the following steps:
-1"- a mixture comprising some of the reactive POS(s), all of the unreactive POS(s), the water and the first fraction of CA is homogenized,
-2- the particulate reinforcing filler is gradually added to the mixture obtained in 1",
-3- mixing is continued without heating,
-4- the second fraction of CA is gradually incorporated into the mixture obtained in 3,
-5- mixing is continued without heating,
-6- the mixture is devolatilized,
-7- the devolatilized mixture is optionally left to cool, and
-8- the suspension is completed with the rest of the reactive POS(s).

6. Process according to any one of Claims 1 to 5, **characterized in that** the particulate reinforcing filler consists of a siliceous filler chosen from the group formed by precipitated silicas and pyrogenic silicas and mixtures thereof, these silicas having a BET specific surface of greater than 40 m²/g.

7. Process according to any one of Claims 1 to 6, **characterized in that** the compatibilizer CA is chosen from organosilazanes and cycloorganosilazanes, which are liquid at a temperature of 23°C and under a pressure of 1 010.8 × 10² Pa, these compounds being used alone or as a mixture.

8. Process according to any one of Claims 1 to 7, **characterized in that** the reactive POSs correspond to formula (1) below: 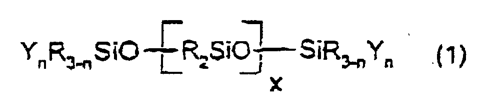 in which:
+ R represents identical or different monovalent hydrocarbon-based radicals, and Y represents identical or different hydrolysable or condensable groups, or a hydroxyl group,
+ n is chosen from 1, 2 and 3 with n = 1 when Y is a hydroxyl, and x has a value which is sufficient to give the oils of formula (1) a dynamic viscosity at 25°C of between 1 000 and 200 000 mPa.s.

9. Process according to any one of Claims 1 to 8, **characterized in that** the unreactive POSs correspond to formula (2) below: 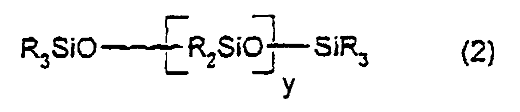 in which:
+ the substituents R, which may be identical or different, represent monovalent hydrocarbon-based radicals,
+ the symbol y has a value which is sufficient to give the polymers a dynamic viscosity at 25°C of between 10 and 10 000 mPa.s.

10. Process for obtaining a polyorganosiloxane composition which may be vulcanized or cured by polycondensation, **characterized in that** it consists in mixing together the following products:
-A- the suspension as prepared according to the process defined in any one of Claims 1 to 9;
-B- optionally one or more semi-reinforcing, non-reinforcing or bulking filler(s);
-C- optionally water;
-D- optionally one or more reactive POS(s) as defined in Claim 1 or 8;
-E- optionally one or more reactive PCS(s) as defined in Claim 8, in which the symbol x in formula (1) has a value which is sufficient to give the polymers a dynamic viscosity at 25°C of between 30 and 500 mPa.s;
-F- optionally one or more unreactive POS(s) as defined in Claim 1 or 9;
-G- one or more vulcanizing agent(s) chosen from:
• a silane of general formula:
R₄₋ₐSiY'ₐ (3)
in which:
- the substituents R, which may be identical or different, have the same meanings as those given above in formula (1) of Claim 8,
- the symbols Y', which may be identical or different, represent the same hydrolysable or condensable groups as those mentioned above with respect to the groups Y of formula (1) of Claim 8,
• the products of partial hydrolysis of a silane of formula (3),
said ingredient G being obligatory when the reactive POS(s) is (are) α,ω-dihydroxylated POSs, and optional when the reactive POS(s) bear at each chain end condensable groups (other than OH) or hydrolysable groups;
-H- a polycondensation vulcanization or curing catalyst;
-I- optionally one or more additive(s) chosen from pigments, plasticizers, other rheology modifiers, stabilizers and/or adhesion promoters.

11. Process according to Claim 10, **characterized in that**:
- each composition is produced in the form of a two-component system C1 and C2, intended to be placed in contact with each other to give a polycondensation RTV elastomer, and
- the process is carried out such that only one of the parts C1 or C2 contains the catalyst H and optionally the vulcanizing agent(s) G.
